# DEMANDE DE BREVET EUROPEEN

(11) **EP 1 733 927 A1**
(43) Date de publication de la demande: **20.12.2006**
(21) Numéro de dépôt: 06300480.8
(22) Date de dépôt: 17.05.2006
(51) Int. Cl.: B60R 19/18, B60R 21/34, B60R 19/04

(54) **Poutre d'absorption d'énergie, notamment pour pare-chocs de véhicule automobile, et véhicule automobile équipé d'une telle poutre**

(30) Priorité: 17.06.2005 FR 0506165
(71) Demandeur: Peugeot Citroen Automobiles SA, 78943 Vélizy-Villacoublay Cedex (FR)
(72) Inventeur: Milasevic, Christian, 78000, VERSAILLES (FR)

(57) **Abrégé**

L'invention concerne une poutre (1) d'absorption d'énergie, notamment pour pare-chocs de véhicule automobile, caractérisée en ce qu'elle comprend un caisson (2) relié au châssis (3) du véhicule et portant une semelle avant (4) verticale ménageant avec ledit caisson (2), un espace et comportant une succession de zones alternées (5, 6) à raideurs différentes.

## Description

La présente invention concerne une poutre d'absorption d'énergie, notamment pour un pare-chocs de véhicule automobile, et un véhicule automobile équipé d'une telle poutre.

Dans le cadre de la sécurité passive qui concerne l'ensemble des moyens et des actions mises en oeuvre pour diminuer les conséquences d'un accident, les constructeurs automobiles doivent faire face à trois préoccupations majeures.

La première préoccupation consiste à assurer la protection des occupants du véhicule lors d'un choc frontal, latéral ou arrière et également lors d'un retournement du véhicule.

La deuxième consiste à maîtriser les coûts de réparation du véhicule lors de chocs dits "urbains", c'est à dire à faible vitesse.

Enfin, la troisième préoccupation des constructeurs consiste à limiter l'agressivité du véhicule vis à vis des autres usagers de la route et notamment les piétons afin de réduire les risques de blessures graves au niveau des jambes.

La conception d'un véhicule automobile doit aujourd'hui répondre à de nombreuses réglementations et doit donc subir des procédures d'essai, entre autres, pour le choc piéton et le choc à faible vitesse au niveau de la réparabilité.

Le choc piéton permet d'estimer les dommages corporels d'un individu en situation de choc sur un véhicule. Pour limiter ces dommages corporels, il est donc nécessaire d'absorber l'énergie cinétique sous un effort limité ce qui se traduit en terme d'architecture du véhicule au niveau de la première couche du pare-chocs, par la présence d'un élément absorbant mou.

Le choc réparabilité consiste à estimer le coût des réparations sur le véhicule testé, lorsqu'il percute un mur rigide à faible vitesse de l'ordre de 16 km/h. La conception du véhicule permet donc de réduire les coûts de réparation à basse vitesse en intégrant une zone spécialement destinée à absorber l'énergie cinétique. Cette zone est placée à l'avant du véhicule et doit absorber l'énergie sous un effort limité. Cet effort limité correspond à la limite de ce que peut supporter le reste du véhicule sans provoquer d'endommagement.

Pour répondre à ces deux configurations de chocs, l'avant des véhicule automobiles est conçu d'une façon particulière. Le plus souvent, l'avant des véhicules est constitué de deux zones distinctes, disposées l'une derrière l'autre et de raideurs différentes. Ainsi, le pare-chocs du véhicule comporte une poutre d'absorption d'énergie comprenant une première zone dite molle, c'est à dire de raideur très faible, visant à limiter les dommages corporels dans le cas d'un choc piéton et une seconde zone plus raide que la précédente, dimensionnée pour le choc réparabilité.

Dans le premier cas, c'est le piéton que l'on cherche à protéger et dans le second cas, c'est le véhicule automobile.

Jusqu'à présent, ces deux zones sont placées l'une derrière l'autre à cause de ces raideurs différentes si bien que cette disposition entraîne un encombrement contribuant à un porte à faux à l'avant du véhicule relativement important.

L'invention a pour but de proposer une poutre d'absorption d'énergie qui permet de satisfaire aux critères de sécurité lors d'un choc piéton et lors d'un choc à faible vitesse, tout en permettant de réduire l'encombrement dédié respectivement aux chocs piéton et aux chocs réparabilité de la poutre et, de ce fait, du porte à faux à l'avant du véhicule automobile.

L'invention a donc pour objet une poutre d'absorption d'énergie, notamment pour un pare-chocs de véhicule automobile, caractérisé en ce qu'elle comprend un caisson relié au châssis du véhicule et portant une semelle avant vertical ménageant avec ledit caisson un espace et comportant une succession de zones alternées à raideurs différentes.

Selon d'autres caractéristiques de l'invention:
- les zones à raideurs différentes sont formées par des parties en saillie et en creux alternées et verticales, le sommet de chaque partie en saillie étant relié au caisson par une entretoise,
- la semelle est recouverte extérieurement d'une peau en matériau souple, et
- le caisson et la semelle sont déplaçables transversalement par rapport à l'axe longitudinal du véhicule.

L'invention a également pour objet un véhicule automobile comprenant une poutre d'absorption d'énergie, caractérisé en ce que la poutre est une poutre telle que précédemment mentionnée.

L'invention sera mieux comprise à la lecture de la description qui va suivre, donnée à titre d'exemple et faite en se référant aux dessins annexés, sur lesquels :
- la Fig. 1 est une vue schématique en perspective d'une poutre d'absorption d'énergie conforme à l'invention, et
- la Fig. 2 est une vue schématique en coupe transversale d'une variante de la poutre d'absorption d'énergie conforme à l'invention.

Dans la description qui suit, les orientations utilisées sont les orientations habituelles d'un véhicule automobile et les termes "avant" et "arrière" s'entendent par rapport au sens de la marche normale du véhicule automobile.

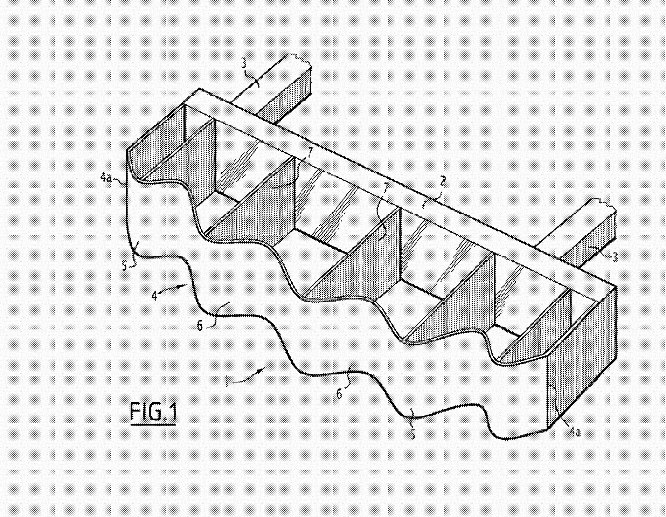

Sur la Fig. 1, on a représenté schématiquement une poutre d'absorption d'énergie, notamment pour un pare-chocs de véhicule automobile, désignée dans son ensemble par la référence 1 et qui permet de satisfaire aux réglementations correspondant à un choc dit "piéton" et à un choc dit "réparabilité".

Cette poutre 1 se compose d'un caisson 2 fixé par des moyens appropriés, non représentés, sur les longerons 3 du châssis du véhicule automobile. La poutre 1 comprend également une semelle avant verticale 4 reliée, à chacune de ses extrémités 4a au caisson 2.

D'une manière générale, la semelle 4 comporte une succession de zones alternées à raideurs différentes et qui sont formées par des parties en saillie 5 et des parties en creux 6 alternées et verticales. Le sommet de chaque partie en saillie 5 est relié au caisson 2 par une entretoise 7.

La semelle 4 de la poutre d'absorption d'énergie 1 présente une forme de vagues répétées sur toute la largeur de la partie avant du véhicule automobile.

Ainsi, la poutre 1 d'absorption d'énergie est "molle" localement et "raide" globalement. En effet, au niveau du sommet des portions en saillie 5, la raideur est grande et elle est faible au niveau du fond des portions en creux 6.

Dans le cas d'un choc avec un piéton, si la jambe heurte la semelle 4 au niveau d'une partie en creux 6, cette jambe se trouve directement en contact avec une zone "molle".

Par contre, si la jambe du piéton heurte la semelle 4 au niveau d'un sommet d'une partie en saillie 5, la jambe est dirigée, grâce à la forme de vagues de cette semelle 4 vers une partie en creux 6 de ladite semelle, c'est à dire vers une zone "molle".

Dans le cas d'un choc avec un mur, plusieurs parties en saillie 5 heurtent ce mur, la raideur correspondante est donc la raideur des sommets de ces parties en saillie 5, c'est à dire une zone raide.

La disposition en parallèle de zones "molles" localement, et de zones "raides" globalement permet de réduire l'encombrement de la poutre 1 d'absorption d'énergie qui est de l'ordre de 140 mm alors que l'encombrement des poutres d'absorption d'énergie utilisées jusqu'à présent, est de l'ordre de 200 mm, soit une réduction de l'encombrement de l'ordre de 60 mm.

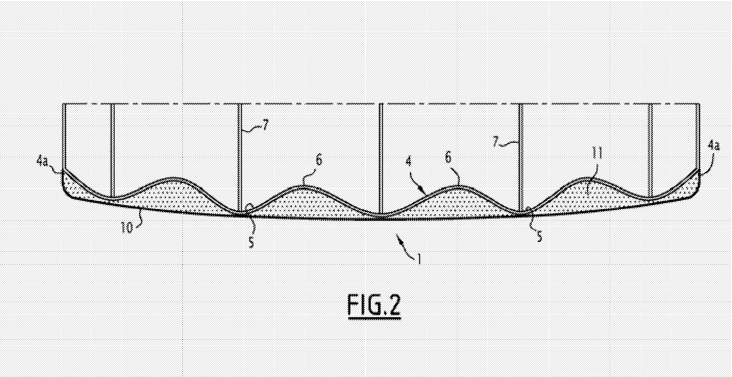

Selon un mode de réalisation représenté à la Fig. 2, la semelle 4 est recouverte extérieurement d'une peau 10 en matériau souple qui est en appui sur les sommets des parties en saillie 5. Une mousse 11 peut être intercalée entre la peau 10 et le fond des parties en creux 6.

Selon une autre variante, l'ensemble formé par le caisson 2 et la semelle 6 peut être monté déplaçable transversalement par rapport à l'axe longitudinal du véhicule au moyen d'un système approprié, comme par exemple des glissières, de façon à déplacer la poutre 1 d'absorption d'énergie lors d'un choc avec une jambe d'un piéton pour que cette jambe vienne en contact avec une partie en creux 6, c'est à dire une partie "molle".

La poutre d'absorption d'énergie selon l'invention permet de satisfaire aux critères de sécurité lors d'un choc piéton et lors d'un choc à faible vitesse, tout en permettant de réduire l'encombrement des zones destinées aux chocs piétons et destinées aux chocs à faible vitesse et, de ce fait, de diminuer le porte à faux à l'avant du véhicule automobile.

## Revendications

1. Poutre d'absorption d'énergie, notamment pour un pare-chocs de véhicule automobile, **caractérisée en ce qu'**elle comprend un caisson (2) relié au châssis (3) du véhicule et portant une semelle avant (4) verticale ménageant avec ledit caisson (2) un espace et comportant une succession de zones alternées (5, 6) à raideurs différentes.

2. Poutre selon la revendication 1, **caractérisée en ce que** les zones à raideurs différentes sont formées par des parties en saillie (5) et en creux (6) alternées verticales, le sommet de chaque partie en saillie (5) étant relié au caisson (2) par une entretoise (7).

3. Poutre selon la revendication 1 ou 2, **caractérisée en ce que** la semelle (4) est recouverte extérieurement d'une peau (10) en matériau souple.

4. Poutre selon l'une quelconque des revendications 1 à 3, **caractérisée en ce que** le caisson (2) et la semelle (4) sont déplaçables transversalement par rapport à l'axe longitudinal du véhicule.

5. Véhicule automobile comprenant une poutre (1) d'absorption d'énergie, **caractérisé en ce que** la poutre (1) est une poutre selon l'une quelconque des revendications précédentes.
